(19) Europäisches Patentamt
European Patent Office
Office européen des brevets

(11) **EP 3 504 703 B1**

(12) **EUROPEAN PATENT SPECIFICATION**

(45) Date of publication and mention
of the grant of the patent:
**03.08.2022 Bulletin 2022/31**

(21) Application number: **17844451.9**

(22) Date of filing: **24.08.2017**

(51) International Patent Classification (IPC):
**G10L 15/00** (2013.01)    **G06N 3/04** (2006.01)
**G10L 25/30** (2013.01)    **G06N 3/08** (2006.01)
**G10L 15/16** (2006.01)    **G10L 17/02** (2013.01)
**G10L 15/02** (2006.01)    **G10L 15/06** (2013.01)

(52) Cooperative Patent Classification (CPC):
**G06N 3/0445; G06N 3/0454; G10L 15/02;**
**G10L 15/063; G10L 15/16; G10L 25/30;**
G06N 3/084

(86) International application number:
**PCT/US2017/048499**

(87) International publication number:
**WO 2018/039500 (01.03.2018 Gazette 2018/09)**

(54) **A SPEECH RECOGNITION METHOD AND APPARATUS**

SPRACHERKENNUNGSVERFAHREN UND -VORRICHTUNG

PROCÉDÉ ET APPAREIL DE RECONNAISSANCE VOCALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.08.2016 CN 201610741622**

(43) Date of publication of application:
**03.07.2019 Bulletin 2019/27**

(73) Proprietor: **Alibaba Group Holding Limited
George Town (KY)**

(72) Inventors:
• **HUANG, Zhiying**
**Hangzhou 311121 (CN)**
• **XUE, Shaofei**
**Hangzhou 311121 (CN)**
• **YAN, Zhijie**
**Hangzhou 311121 (CN)**

(74) Representative: **Finnegan Europe LLP
1 London Bridge
London SE1 9BG (GB)**

(56) References cited:
**US-A1- 2015 127 327    US-A1- 2015 269 933
US-A1- 2016 163 310**

• **SHAOFEI XUE ET AL: "Fast adaptation of deep neural network based on discriminant codes for speech recognition", IEEE/ACM TRANSACTIONS ON AUDIO, SPEECH, AND LANGUAGE PROCESSING, IEEE, USA, vol. 22, no. 12, 1 December 2014 (2014-12-01), pages 1713-1725, XP058065939, ISSN: 2329-9290, DOI: 10.1109/TASLP.2014.2346313**
• **HUANG ZHIYING ET AL: "Speaker adaptation OF RNN-BLSTM for speech recognition based on speaker code", 2016 IEEE INTERNATIONAL CONFERENCE ON ACOUSTICS, SPEECH AND SIGNAL PROCESSING (ICASSP), IEEE, 20 March 2016 (2016-03-20), pages 5305-5309, XP032901616, DOI: 10.1109/ICASSP.2016.7472690 [retrieved on 2016-05-18]**
• **Yajie Miao ET AL: "Towards Speaker Adaptive Training of Deep Neural Network Acoustic Models", , 1 December 2014 (2014-12-01), XP055601155, DOI: 10.1184/R1/6473777 Retrieved from the Internet: URL:https://www.cs.cmu.edu/~ymiao/pub/ivec _draft_final.pdf [retrieved on 2019-07-01]**

EP 3 504 703 B1

- **VARIANI EHSAN ET AL: "Deep neural networks for small footprint text-dependent speaker verification", 2014 IEEE INTERNATIONAL CONFERENCE ON ACOUSTICS, SPEECH AND SIGNAL PROCESSING (ICASSP), IEEE, 4 May 2014 (2014-05-04), pages 4052-4056, XP032617560, DOI: 10.1109/ICASSP.2014.6854363 [retrieved on 2014-07-11]**
- **LIU YUAN ET AL: "Deep feature for text-dependent speaker verification", SPEECH COMMUNICATION, vol. 73, 30 October 2015 (2015-10-30), pages 1-13, XP029261775, ISSN: 0167-6393, DOI: 10.1016/J.SPECOM.2015.07.003**

## Description

## TECHNICAL FIELD

The present application relates to speech recognition, and more particularly, to a speech recognition method and apparatus.

## BACKGROUND

At present, great progress has been made on speaker independent (SI) speech recognition systems. But differences between different users may result in performance degradation of the speech recognition system for specific users.

Speaker dependent (SD) speech recognition systems can solve the problem of performance degradation of the SI speech recognition systems. However, the SD speech recognition system requires an input of a large amount of user speech data for training, which causes great inconvenience for users and results in high cost.

Speaker adaptation technologies can make up for the shortcomings of the SI and SD speech recognition systems to a certain extent. With the speaker adaptation technologies, SD speech features can be transformed into SI speech features, which are then provided to an SI acoustic model for recognition. Alternatively, SI acoustic systems may be converted into SD acoustic systems. Then, the SD speech features are recognized.

Compared with the SI speech recognition systems, the speaker adaptation technologies consider speech features with user individual differences, and therefore have better recognition performance. Compared with the SD recognition systems, the speaker adaptation technologies introduce the prior information of the SI systems, and thus the amount of user speech data required is greatly reduced.

The speaker adaptation technologies can be divided into off-line speaker adaptation technologies and on-line speaker adaptation technologies depending on whether user speech data is obtained in advance. With the on-line speaker adaptation technologies, parameters of speech recognition systems can be adjusted at regular intervals (e.g., 600 ms) according to the current user speech input, thereby realizing speaker adaptation.

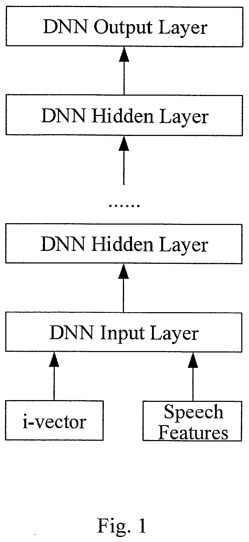

At present, a solution of the on-line speaker adaptation methods is shown in Fig. 1. The solution may include splicing speech features of a user and an i-vector (i.e., a distinguishable vector) extracted for the user. The solution may also include inputting the spliced features into a deep neural network (DNN) for speech recognition. An extraction process of the i-vector may include inputting acoustic features of speech into a Gaussian mixture model to obtain a mean supervector, and multiplying the mean supervector by a T matrix to obtain the i-vector. When the user is speaking, according to the solution, the i-vector can be extracted from the beginning part of the user's speech. The extracted i-vector is used for speech recognition of the rest of the user's speech, thus realizing the on-line speaker adaptation.

The solution mainly has the following problems. In the on-line speaker adaptation technologies, since the i-vector extraction process is complicated and requires a certain time length of speech data, speech data for extracting the i-vector and speech data for speech recognition are different from each other. In speech recognition, the speech data for extracting the i-vector is the preliminary speech data of those speech data to be recognized. Therefore, the i-vector does not match the speech data that needs to be recognized, thus affecting the performance of speech recognition.

SHAOFEI XUE ET AL, "Fast adaptation of deep neural network based on discriminant codes for speech recognition", IEEE/ACM Transactions On Audio, Speech, And Language Processing, IEEE, USA, vol. 22, no. 12, 1 December 2014 , pages 1713-1725, discloses systems and methods for fast adaptation of deep neural networks (DNNs) based on discriminant codes for speech recognition. HUANG ZHIYING ET AL: "Speaker adaptation OF RNN-BLSTM for speech recognition based on speaker code", 2016 IEEE International Conference on Acoustics, Speech and Signal Processing (ICASSP), IEEE, 20 March 2016, pages 5305-5309, discloses system and methods for speech adaptation. Yajie Miao ET AL: "Towards Speaker Adaptive Training of Deep Neural Network Acoustic Models", 1 December 2014, discloses training of DNNs for speaker adaptation. VARIANI EHSAN ET AL: "Deep neural networks for small footprint text-dependent speaker verification", 2014 IEEE International Conference on Acoustics, Speech and Signal Processing (ICASSP), IEEE, 4 May 2014, pages 4052-4056, discloses DNNs for small footprint text-dependent speaker verification.

## SUMMARY

Embodiments of the present disclosure provide a speech recognition method, computer-readable medium, computer program and apparatus that can effectively improve the performance of speech recognition in the on-line speaker adaptation without introducing too much computation complexity.

A speech recognition method and a speech recognition apparatus for online speaker adaptive recognition as recited in claims 1 and 9 respectively are disclosed. Also disclosed are a computer-readable medium and a computer program as recited in claims 7 and 8 respectively.

## BRIEF DESCRIPTION OF THE DRAWINGS

The accompanying drawings, which constitute a part of this specification, illustrate several embodiments and, together with the description, serve to explain the disclosed principles.

Fig. 1 is a schematic diagram of an exemplary i-vector based on-line speaker adaptation solution.

Fig. 2 is a flow chart of an exemplary speech recognition method, according to some embodiments of the present disclosure.

Fig. 3 is a schematic diagram of an exemplary system architecture for speech recognition, according to some embodiments of the present disclosure.

Fig. 4 illustrates a schematic diagram of an exemplary neural network, according to some embodiments of the present disclosure.

Fig. 5 is a schematic diagram of an exemplary system architecture, according to some embodiments of the present disclosure.

Fig. 6 is a schematic diagram of an exemplary speech recognition apparatus, according to some embodiments of the present disclosure.

Fig. 7 is a flow chart of an exemplary speech recognition method, according to some embodiments of the present disclosure.

Fig. 8 is a schematic diagram of an exemplary implementation process of the speech recognition method, according to some embodiments of the present disclosure.

Fig. 9 is a schematic diagram of an exemplary speech recognition apparatus, according to some embodiments of the present disclosure.

DETAILED DESCRIPTION

Many details are illustrated in the following descriptions to facilitate a comprehensive understanding of the present disclosure. Methods and apparatuses in the present disclosure may be implemented in many other ways different from these described herein. Therefore, the present disclosure is not limited to specific implementations disclosed in the following.

The technical solution of the present application will be described in detail with reference to accompanying drawings and embodiments. In addition, although a logical order is shown in the flow charts, in some cases, the steps shown or described may be executed in an order different from that herein.

In some embodiments, a computing device that executes the speech recognition method may comprise one or more processors (CPUs), an input/output interface, a network interface, and a memory.

The memory may include a non-permanent memory, a random access memory (RAM), and/or a nonvolatile memory, such as a read-only memory (ROM) or a flash memory (flash RAM), in computer-readable media. The memory is an example of computer-readable media. The memory may include module 1, module 2, ..., module N, where N is an integer greater than 2.

The computer-readable media include permanent and non-permanent, removable and non-removable storage media. The storage media may realize information storage with any method or technology. The information may be a computer-readable instruction, data structure, program module or other data. Examples of computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disk read-only memory (CD-ROM), digital versatile disc (DVD) or other optical storage, magnetic cassette tape, magnetic disk storage or other magnetic storage devices or any other non-transmission media which can be used to store information that can be accessed by computing devices. As defined herein, the computer-readable media do not include transitory media, such as modulated data signals and carriers.

The embodiments of the present disclosure provide many advantages. Some of these embodiments include extracting, via a first neural network, a vector containing speaker recognition features from speech data, compensating bias in a second neural network in accordance with the vector containing the speaker recognition features. This results in transforming the neural network for speech recognition from an SI acoustic system to an SD acoustic system, thereby improving the recognition performance. Since the speech data from which the vector containing the speaker recognition features is extracted is the same as the speech data for speech recognition, the recognition performance may be significantly improved. Moreover, when the vector containing the speaker recognition features is extracted via a neural network for speaker recognition, the extraction can be realized through the forward process of the neural network.

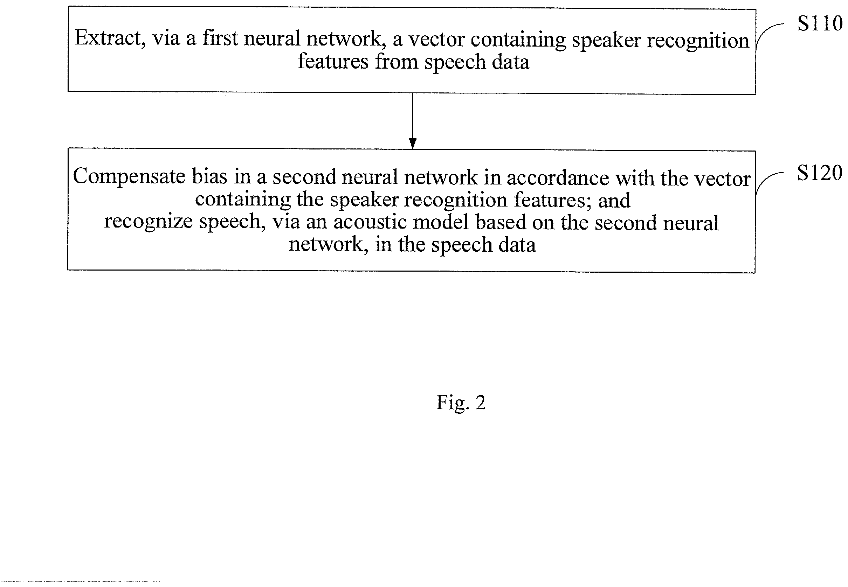

Fig. 2 is a flow chart of an exemplary speech recognition method, according to some embodiments of the present disclosure. The speech recognition method includes steps S110 and S120.

In step S110, a vector containing speaker recognition features from speech data is extracted via a first neural network. In some embodiments, after step S110, the method may further include length normalizing the extracted vector containing speaker recognition features. In some embodiments, the extracted vector containing speaker recognition features can be used directly without length normalization.

In step S120, a bias is compensated in a second neural network in accordance with the vector containing the speaker recognition features; and speech in the speech data is recognized via an acoustic model based on the second neural network.

The language "first" and "second" are only used to distinguish, for example, different neural networks. Without departing from the scope of the exemplary embodiments, the first neural network may be referred to as a second neural network. Likewise, the second neural network may be referred to as a first neural network.

The first neural network is a neural network for classifying speakers. The first neural network extracts speaker recognition features according to the input speech data, such as, but not limited to, speaker voiceprint information. The second neural network is a neural network for speech recognition. The second neural network recognizes text information according to the input speech data.

The method is applied to a system including a first neural network and a second neural network. Speech data is input into the first neural network and the second neural network for recognition. The method includes extracting, via the first neural network, a vector containing speaker recognition features from speech data. The method also includes compensating bias in the second neural network in accordance with the vector containing the speaker recognition features. The method also includes recognizing speech, via an acoustic model based on the second neural network, to obtain text information in the speech data.

The speaker recognition features refer to features that can effectively characterize individual differences of a speaker. The individual differences of the speaker may be caused by differences in the vocal tract. The individual differences of the speaker may also be caused by the environment or channels. The speaker adaptation technology is a compensation technology, which can be used for vocal tract compensation and compensation for different speaking environments, such as noisy environments and office environments. The speaker adaptation technology can also be used for compensation for different channels, such as telephone channels and microphone channels. In different environments or through different channels, speech data collected from the same user can be regarded as speech data of different speakers because of different speaker recognition features.

In the embodiments herein, a neural network may contain a plurality of neuron nodes connected together. An output of one neuron node may be an input of another neuron node. The neural network may include multiple neural layers. According to their functions and nature, neural layers in the neural network can be divided into: an input layer, hidden layers, and an output layer. The hidden layers refer to layers invisible to a user. The input layer is responsible for receiving the input and distributing to the hidden layers. There may be one or more hidden layers. The output result of the last hidden layer is provided to the output layer. The user can see the final result output from the output layer. The neural networks and bias compensation will be described in detail below.

In the method, the acoustic model based on the second neural network may be speaker-independent, and can be converted into an SD acoustic model by introducing a vector containing speaker recognition features for bias compensation. Therefore, the performance of speech recognition may be improved.

The neural network is one kind of global models that can compute multiple dimensions of acoustic features in parallel. In another aspect, the Gaussian model used to extract the i-vector is a local model and needs to compute each of the dimensions separately. Therefore, when the first neural network is used to extract the vector containing the speaker recognition features in this method, short speech data can be used for extraction to achieve better real-time performance and to be feasible in actual products.

In addition, since the system using the Gaussian mixture model is different from the neural network based system, joint optimization of these two systems may be not easy. Nonetheless, in the embodiments of the present application, the first neural network and the second neural network can be optimized as a whole. Moreover, the process where the vector containing the speaker recognition features is extracted via the first neural network is simple and involves a small computation amount. It may meet the real-time requirement of the online speaker adaptive recognition. Besides, short-time data can be used for the extraction.

When short-term data can be used for the extraction, speech data from which the vector containing the speaker recognition features is extracted can be the speech data to be recognized. In other words, the extracted vector containing speaker recognition features may well match the speech data to be recognized. Accordingly, the performance of speech recognition can be improved significantly.

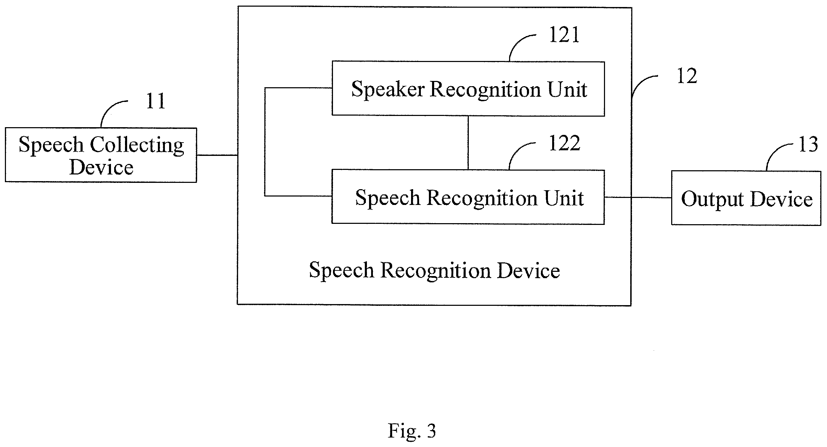

Fig. 3 is a schematic diagram of an exemplary system architecture for speech recognition, according to some embodiments of the present disclosure. The system includes a speech collecting device 11, a speech recognition device 12, and an output device 13.

Speech recognition device 12 includes a speaker recognition unit 121 configured to perform the above-described step S110, and a speech recognition unit 122 configured to perform the above-described step S120. In other words, speaker recognition unit 121 is configured to send the extracted vector containing speaker recognition features to speech recognition unit 122. Alternatively, speech recognition unit 122 is configured to acquire the vector containing the speaker recognition features from speaker recognition unit 121.

Speech collecting device 11 may be configured to collect original speech data, and output the original speech data or speech features extracted from the original speech data to speaker recognition unit 121 and speech recognition unit 122, respectively.

Output device 13 is configured to output a recognition result of speech recognition unit 122. The output schemes of output device 13 may include, but are not limited to, one or more of the following: storing the recognition result in a database, sending the recognition result to a predetermined device, or displaying the recognition result on a predetermined device.

In some embodiments, speech collecting device 11 and speech recognition device 12 may be integrated in one device. Alternatively, speech collecting device 11 may send, via a connection line, a wireless connection or the like, the original speech data or the extracted speech features to speech recognition device 12. In some embodiments, when speech recognition device 12 is located at a network side, speech collecting device 11 may send, via the Internet, the original speech data or the extracted speech features to speech recognition device 12.

Output device 13 and speech recognition device 12 can be integrated in one device. Alternatively, output device 13 may be configured to receive or acquire, via a connection line, a wireless connection, or the like, the recognition result from speech recognition device 12. In some embodiments, when speech recognition device 12 is located at a network side, output device 13 may be configured to receive or acquire, via the Internet, the recognition result from speech recognition device 12.

Speech recognition device 12 further includes a computing unit for multiplying the vector containing the speaker recognition features by a weight matrix. The vector containing the speaker recognition features are extracted by speaker recognition unit 121. Speech recognition device 12 is a configured to provide the product of the multiplication to speech recognition unit 122. Alternatively, speaker recognition unit 121 or speech recognition unit 122 are configured to multiply the vector containing the speaker recognition features by the weight matrix.

Speech recognition device 12 may not be an independent device. For example, speaker recognition unit 121 and speech recognition unit 122 may be distributed in two devices. Speaker recognition unit 121 or speech recognition unit 122 may also be implemented by one or more distributed devices.

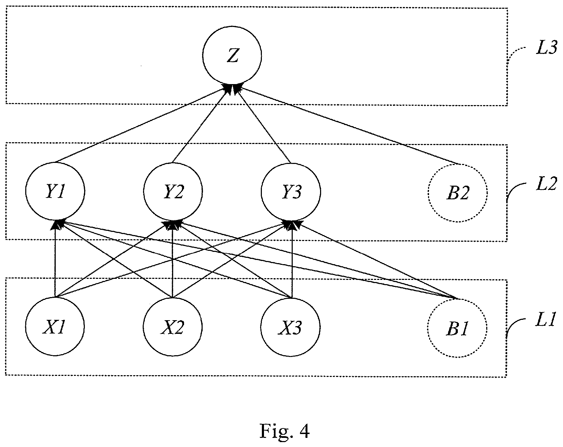

Fig. 4 illustrates a schematic diagram of an exemplary neural network, according to some embodiments of the present disclosure. As shown in Fig. 4, the neural network comprises an input layer L1, a hidden layer L2, and an output layer L3. Input layer LI contains three neuron nodes X1, X2 and X3. Hidden layer L2 contains three neuron nodes Y1, Y2 and Y3. Output layer L3 contains one neuron node Z. The neural network shown in Fig. 4 is merely used to illustrate the principle of a neural network and is not intended to define the first neural network and the second neural network described above.

In **Fig. 4,** a bias node B1 corresponds to hidden layer L2, and is used to store a bias term for bias compensation at hidden layer L2. The bias term in bias node B1 and outputs of each neuron node in input layer L1 provide inputs for each neuron node in hidden layer L2. A bias node B2 corresponds to output layer L3, and is used to store a bias term for bias compensation at output layer L3. The bias term in bias node B2 and outputs of each neuron node in hidden layer L2 provide inputs for each neuron node in output layer L3. The bias term may be either preset or input into the neural network from an external device.

The bias term refers to a vector used for bias compensation. Bias compensation at a certain layer refers to, for each neuron node of the layer, the computation is based on a result of the weighted summation of output values of all neuron nodes of the previous layer, plus a value, corresponding to the neuron node, in the bias term provided by the bias node corresponding to the layer.

For example, assuming that the output values of neuron nodes X1, X2 and X3 in input layer L1 are x1, x2 and x3, respectively. For neuron node Y1 in hidden layer L2, the output value is:

$$\mathrm{f}\left(\ \mathrm{W}_{11}^{L1}\ x1 + \mathrm{W}_{12}^{L1}\ x2 + \mathrm{W}_{13}^{L1}\ x3 + \mathrm{b}_{1}^{B1}\ \right)$$

where f represents the computation made by neuron node Y1 on the content in the brackets, the content in the brackets represents the input value received by neuron node Y1; $W_{ij}^{L1}$ refers to the weight between the j-th neuron node in layer L1 and the i-th neuron node in the next layer (i.e., layer L2), for example, for Y1, i = 1, j = 1, 2, 3; and $b_s^{B1}$ refers to the value of the bias term in bias node B1, corresponding to the s-th neuron node in hidden layer L2, s = 1, 2, 3, for example, the value of the bias term in bias node B1, corresponding to the neuron node Y1, is $b_s^{B1}$.

Referring back to **Fig. 2,** in step S120, compensating bias in a second neural network in accordance with the vector containing the speaker recognition features may refer to linearly transforming the vector containing the speaker recognition features and taking it as the bias term of a certain layer or certain layers, other than the input layer, in the second neural network. The linear transformation may be made in, but is not limited to, a way of multiplication by the weight matrix.

The first neural network can include three hidden layers. In some embodiments, the first neural network may include one or two hidden layers, or may include four or more hidden layers. In some embodiments, the second neural network may include three hidden layers. In some embodiments, the second neural network may include one or two hidden layers, or may include four or more hidden layers.

In some embodiments, the speaker recognition features may include at least speaker voiceprint information. The speaker voiceprint information can be used to distinguish speech data of different users. In other words, the speaker voiceprint information extracted from the speech data of different users is different. In some embodiments, the speaker recognition features may include one or more of the following: speaker voiceprint information, environment information, and channel information. The environment information can be used to characterize the features of environment where the speech data is collected. The channel information can be used to characterize the features of the channel where the speech data is collected.

In some embodiments, the first neural network may be a recursive neural network. The recursive neural network refers to a neural network having one or more feedback loops, and can achieve real dynamic modeling for a nonlinear system. When a recursive neural network is used to extract the vector containing the speaker recognition features, the extraction can be performed on shorter-term data. The recurrent neural network may be, but is not limited to, an long-short term memory (LSTM) recurrent neural network.

In some embodiments, compensating bias in the second neural network in accordance with the vector containing the speaker recognition features in step 120 includes multiplying the vector containing the speaker recognition features by a weight matrix to be a bias term of the second neural network.

In some embodiments, when the weight matrix is a unit matrix, after multiplied by a weight matrix, the vector containing the speaker recognition features may not change. The vector containing the speaker recognition features can be directly taken as the bias term of the second neural network.

In some embodiments, the first neural network, the second neural network, and the weight matrix may be trained through training the first neural network and the second neural network respectively, and training the trained first neural network, the weight matrix, and the trained second neural network collectively. Training collectively may refer to inputting speech data for training into the first neural network and the second neural network respectively, and compensating bias on the second neural network after multiplying the vector containing the speaker recognition features, extracted by the first neural network, by the weight matrix. The training may be performed by, but not limited to a graphics processing unit (GPU).

In some embodiments, after training the trained first neural network, the weight matrix, and the trained second neural network collectively, the method may further include initializing the first neural network, the second neural network, and the weight matrix. The method may also include updating the weight matrix using a back propagation algorithm in accordance with a predetermined objective criterion. In addition, the method may include updating the second neural network and a connection matrix using the error back propagation algorithm in accordance with a predetermined objective criterion. The initialization on the weight matrix may be a random initialization according to the Gaussian distribution. The above predetermined objective criterion may include, but is not limited to: target least mean square error (LMS), recursive least square (RLS), and normalized least mean square error (NLMS).

In some embodiments, compensating bias in the second neural network in accordance with the vector containing the speaker recognition features includes compensating bias at all or a part of layers, except for an input layer, in the second neural network in accordance with the vector containing the speaker recognition features. The vector containing the speaker recognition features is an output vector of a last hidden layer in the first neural network. For example, assuming that the second neural network contains an input layer, three hidden layers and an output layer, all the layers, except for the input layer, can refer to the output layer and the three hidden layers. Some layers, except for the input layer, can refer to one or more of the four layers, i.e., the output layer and the three hidden layers.

The bias compensation on a certain layer in the second neural network according to the vector containing the speaker recognition features may refer to taking a vector, obtained by multiplying the vector containing the speaker recognition features by the weight matrix, as the bias term of the layer. For example, the bias compensation on all the layers, other than the input layer, in the second neural network according to the vector containing the speaker recognition features may refer to taking a vector, obtained by multiplying the vector containing the speaker recognition features by the weight matrix, as the respective bias terms of the output layer and the three hidden layers in the second neural network.

In some embodiments, the vector containing the speaker recognition features is an output vector of the last hidden layer in the first neural network. The output vector of the last hidden layer has fewer dimensions with respect to the output vector of the output layer, thereby avoiding overfitting.

In some embodiments not covered by the claims, the vector containing the speaker recognition features may be an output vector of hidden layers, other than the last hidden layer, in the first neural network, or may be an output vector of the output layer.

In some embodiments, compensating bias at all or a part of layers, except for an input layer, in the second neural network in accordance with the vector containing the speaker recognition features may include transmitting the vector containing the speaker recognition features, output by neuron nodes at the last hidden layer of the first neural network, to bias nodes corresponding to the all or the part of layers, except for the input layer, in the second neural network. The bias node corresponding to a certain layer may store a bias term used for bias compensation on the layer. The vector containing the speaker recognition features may be a vector consisting of respective output values of multiple neuron nodes in the last hidden layer in the first neural network.

Transmitting the vector containing the speaker recognition features to the bias nodes may refer to directly sending the vector containing the speaker recognition features to the bias nodes, or may refer to linearly transforming the vector containing the speaker recognition features and then sending to the bias nodes.

When multiple layers in the second neural network are subjected to bias compensation with the same vector, the multiple layers may respectively correspond to a bias node, or the multiple layers may also correspond to the same bias node. For example, the vector containing the speaker recognition features, extracted by the first neural network, may be transmitted to a plurality of bias nodes, respectively. The plurality of bias nodes correspond to a plurality of layers requiring bias compensation in the second neural network on a one-to-one basis. As another example, the vector containing the speaker recognition features, extracted by the first neural network, may also be transmitted to one bias node. The bias node corresponds to a plurality of layers requiring bias compensation in the second neural network.

In some embodiments, the speech data is collected original speech data or speech features extracted from the collected original speech data. The speech features may include, but are not limited to, the Mel frequency cepstral coefficient (MFCC), the perceived linear prediction coefficients (PLP), the filter bank feature, or any combination thereof.

In some embodiments, the speaker recognition features may correspond to different users on a one-to-one basis, or may correspond to clusters of different users on a one-to-one basis. The speaker recognition features corresponding to different users on a one-to-one basis means that the output layer of the first neural network outputs the identity of the user. The speaker recognition features corresponding to clusters of different users on a one-to-one means that the output layer of the first neural network outputs the category identity after the users are clustered.

A cluster may contain one or more patterns, wherein the pattern may refer to a vector of a measurement, or may be a point in a multidimensional space. The clustering operation is based on similarity, and the patterns in the same cluster have more similarity than the patterns in different clusters. The algorithms for clustering can be divided into division methods, hierarchical methods, density algorithms, graph theory-clustering methods, grid algorithms, and model algorithms. For example, the algorithms can be K-MEANS, K-MEDOIDS, Clara, or Clarans.

Clustering users may refer to classifying speaker recognition features of a plurality of users into a plurality of clusters according to the similarity between the speaker recognition features of different users during the training, and computing (e.g., weighted averaging) the plurality of speaker recognition features, which are classified into one cluster to obtain a vector containing speaker recognition features corresponding to the cluster. The category identity can be an identity used to represent one cluster. The category identities correspond to the clusters on a one-to-one basis.

When speech recognition for a very large number of users is required, if the clustering operation is performed, the set of output results may be a limited number of vectors containing speaker recognition features. For example, when there are millions of users, if the users are classified into thousands of clusters, there are only thousands of vectors containing speaker recognition features, thereby greatly reducing the implementation complexity.

When the speaker recognition features are classified into a plurality of clusters according to the similarity between the speaker recognition features, different clustering results may also be obtained according to different dimensions of similarity, e.g., different types of speaker recognition features, such as voiceprint information, environmental information, channel information, etc. For example, speaker recognition features with similar voiceprints can be regarded as one cluster. As another example, speaker recognition features corresponding to the same or similar environment can be regarded as one cluster. Alternatively, speaker recognition features corresponding to similar channels can be regarded as one cluster.

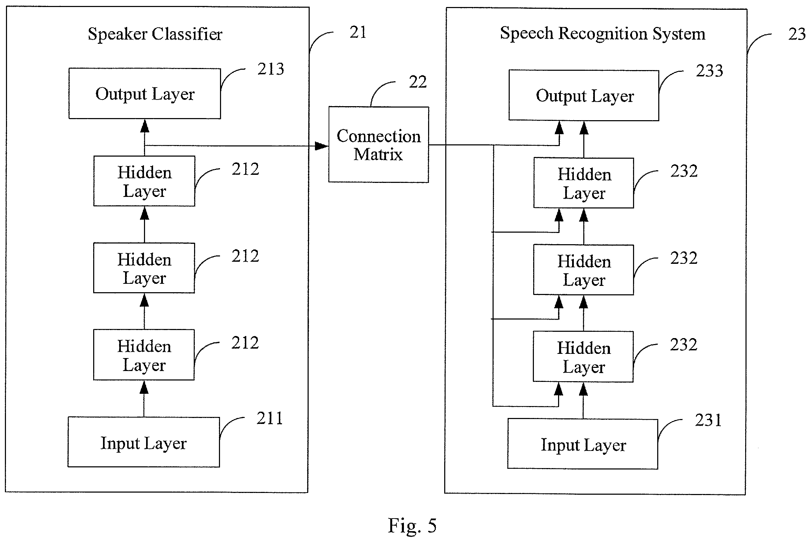

Fig. 5 is a schematic diagram of an exemplary system architecture for speech recognition, according to some embodiments of the present disclosure. As shown in Fig. 5, the system includes a speaker classifier 21 and a speech recognition system 23. The speaker recognition feature in the system is speaker voiceprint information. Speaker classifier 21 is configured to perform the above-described step S110. Speech recognition system 23 is configured to perform the above-described step S120.

The vector containing speaker voiceprint information can be linearly transformed by a connection matrix 22. The connection matrix may be, but is not limited to, a weight matrix.

Speaker classifier 21 utilizing the first neural network for extracting the vector containing the speaker recognition features may include an input layer 211, one or more hidden layers 212, and an output layer 213. In some embodiments, the number of hidden layers 212 may be three. Alternatively, there may be one or more hidden layers 212.

Speech recognition system 23 utilizing the second neural network for recognizing speech may include an input layer 231, one or more hidden layers 232, and an output layer 233. In some embodiments, the number of hidden layers 212 may be three. In some embodiments, there may be one or more hidden layers 212.

The speech data received by input layer 211 of the first neural network in speaker classifier 21 is the same as that received by input layer 231 of the second neural network in speech recognition system 23. The speech data can be the collected original speech data. Alternatively, the speech data can be speech features extracted from the original speech data.

Accordingly, the first neural network in speaker classifier 21 has the same input as the second neural network in speech recognition system 23. That is, the speech data from which the vector containing speaker voiceprint information is obtained is the same as the speech data for speech recognition. Therefore, the bias compensation on the second neural network according to the vector containing speaker voiceprint information can be completely matched with the speech data to be recognized. As a result, the performance of speech recognition can be effectively improved. The first neural network and the second neural network can each include any one or a combination of several of the following neural networks: a fully connected neural network (DNN), a convolution neural network (CNN), and a recurrent neural network (RNN).

A vector expression containing speaker voiceprint information may be an output vector of the last hidden layer in speaker classifier 21.

In speech recognition system 23, each of output layer 233 and one or more hidden layers 232 can take the linearly transformed vector expression containing speaker voiceprint information as a bias term. In some embodiments, in output layer 233 and one or more hidden layers 232, at least one or more layers can take the linearly transformed vector expression containing speaker voiceprint information as a bias term.

Connection matrix 22 may also be configured to carry out length normalization on the vector containing speaker voiceprint information. In some embodiments, the vector containing speaker voiceprint information, output by the speaker classifier, can be directly provided, after being multiplied by a weight, to the speech recognition system 23, without being subjected to the length normalization.

The data output by output layer 213 of speaker classifier 21 may be the tag IDs of different users, or may be the tag ID of a cluster after the users are clustered. The output data of the output layer may be used only for training. The recognition result output from output layer 233 of the speech recognition system 23 may be a state-level, a phone-level, or a word-level tag ID.

The exemplary system architecture shown in Fig. 5 can further perform the following functionality:

Train, using the training data, the acoustic model (e.g., the acoustic model referred to in Fig. 2) based on the second neural network and the first neural network of the speaker classifier. The first and the second neural network can achieve desired speech recognition performance or speaker recognition performance, respectively. Moreover, the training can include training the first neural network, the connection matrix, and the second neural network collectively. A GPU can be used for speeding up these training.

The system architecture can use the trained acoustic model and speaker classifier as the acoustic model and speaker classifier for network initialization. In some embodiments, the network initialization may also include randomly initializing the connection matrix of Fig. 5.

According to a predetermined objective criterion, the system architecture can use the back propagation (BP) algorithm to update the connection matrix to reach a convergent state.

According to a predetermined objective criterion, the system architecture can use the BP algorithm to update the acoustic model and the connection matrix to reach a convergent state. The predetermined objective criterion can be set according to the needs in actual applications.

Moreover, the system architecture can extract speech features from the collected original speech data. The extracted speech features are processed by the speaker classifier, so that a vector containing speaker voiceprint information corresponding to the speech features is obtained. The vector is linearly transformed by the connection matrix and sent to the speech recognition system. The extracted speech features are decoded by the acoustic model based on the second neural network in the speech recognition system. Finally, a speech recognition result can be obtained. In the speech recognition system, the bias terms of the output layer and the three hidden layers of the second neural network may be the linearly transformed vector containing speaker voiceprint information.

The present application also relates to a speech recognition apparatus. The speech recognition apparatus includes a memory configured to store a program for speech recognition. The speech recognition apparatus also includes a processor configured to execute the program for speech recognition. The processor, when executing the program for speech recognition, may be configured to extract, via a first neural network, a vector containing speaker recognition features from speech data.

The processor, when executing the program for speech recognition, may also be configured to compensate bias in a second neural network in accordance with the vector containing the speaker recognition features. The processor, when executing the program for speech recognition, may further be configured to recognize speech, via an acoustic model based on the second neural network, in the speech data.

In some embodiments, the processor being configured to compensate bias in the second neural network in accordance with the vector containing the speaker recognition features may include being configured to multiply the vector containing the speaker recognition features by a weight matrix to be a bias term of the second neural network.

In some embodiments, the speaker recognition features may include at least speaker voiceprint information.

In some embodiments, the processor being configured to compensate bias in the second neural network in accordance with the vector containing the speaker recognition features may include being configured to compensate bias at all or a part of layers, except for an input layer, in the second neural network in accordance with the vector containing the speaker recognition features. The vector containing the speaker recognition features can be an output vector of a last hidden layer in the first neural network.

In some embodiments, the speaker recognition features may correspond to different users on a one-to-one basis, or may correspond to clusters of different users on a one-to-one basis. The speaker recognition features corresponding to different users on a one-to-one basis means that the output layer of the first neural network outputs the identity of the user. The speaker recognition feature corresponding to clusters of different users on a one-to-one basis means that the output layer of the first neural network outputs the category identity after the users are clustered.

In some embodiments, the first neural network may be a recursive neural network.

In some embodiments, the processor being configured to compensate bias in the second neural network in accordance with the vector containing the speaker recognition features includes being configured to transmit the vector containing the speaker recognition features, output by neuron nodes at the last hidden layer of the first neural network, to bias nodes corresponding to the all or the part of layers, except for the input layer, in the second neural network.

Moreover, the processor, when executing the program for speech recognition, may be configured to perform above steps S110 and S120. More details of the operations executed by the processor, when executing the program for speech recognition, can be found above.

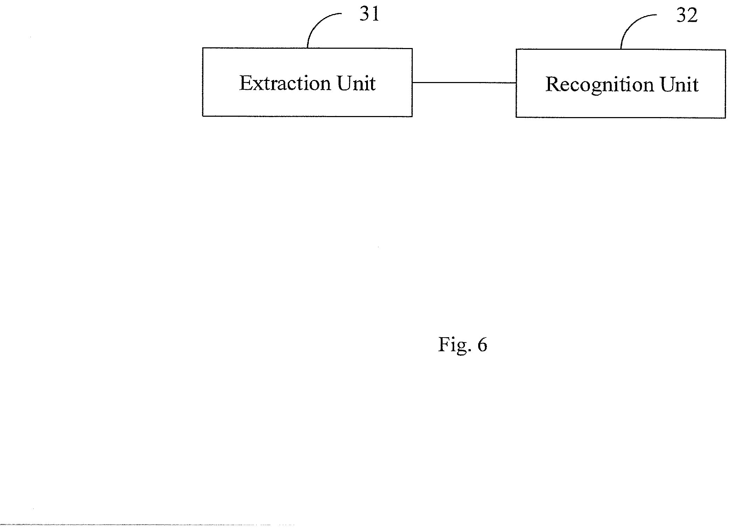

The present application further relates to a speech recognition apparatus. Fig. 6 is a schematic diagram of an exemplary speech recognition apparatus, according to some embodiments of the present disclosure. The speech recognition apparatus includes an extraction unit 31 and a recognition unit 32.

In general, these units (and any sub-units), can be a packaged functional hardware unit designed for use with other components (e.g., portions of an integrated circuit) and/or a part of a program (stored on a computer readable medium) that performs a particular function of related functions. The unit can have entry and exit points and can be written in a programming language, such as, for example, Java, Lua, C or C++. A software unit can be compiled and linked into an executable program, installed in a dynamic link library, or written in an interpreted programming language such as, for example, BASIC, Perl, or Python. It will be appreciated that software units can be callable from other units or from themselves, and/or can be invoked in response to detected events or interrupts. Software units configured for execution on computing devices can be provided on a computer readable medium, such as a compact disc, digital video disc, flash drive, magnetic disc, or any other non-transitory medium, or as a digital download (and can be originally stored in a compressed or installable format that requires installation, decompression, or decryption prior to execution). Such software code can be stored, partially or fully, on a memory device of the executing computing device, for execution by the computing device. Software instructions can be embedding in firmware, such as an EPROM. It will be further appreciated that hardware units can be comprised of connected logic units, such as gates and flip-flops, and/or can be comprised of programmable units, such as programmable gate arrays or processors. The units or computing device functionality described herein are preferably implemented as software units, but can be represented in hardware or firmware. Generally, the units described herein refer to logical units that can be combined with other units or divided into sub-units despite their physical organization or storage.

Extraction unit 31 is configured to extract, via a first neural network, a vector containing speaker recognition features from speech data. Extraction unit 31 is configured to perform operations similar to those for extracting the vector containing the speaker recognition features in the above-described apparatus.

Recognition unit 32 is configured to compensate bias in a second neural network in accordance with the vector containing the speaker recognition features, and recognize speech, via an acoustic model based on the second neural network, in the speech data. Recognition unit 32 is configured to perform operations similar to those for recognizing speech in the above-described apparatus.

In some embodiments, recognition unit 32 being configured to compensate bias in a second neural network in accordance with the vector containing the speaker recognition features includes being configured to multiply the vector containing the speaker recognition features by a weight matrix to be a bias term of the second neural network.

In some embodiments, the speaker recognition features may include at least speaker voiceprint information.

In some embodiments, recognition unit 32 being configured to compensate bias in a second neural network in accordance with the vector containing the speaker recognition features includes being configured to compensate bias at all or a part of layers, except for an input layer, in the second neural network in accordance with the vector containing the speaker recognition features. Alternatively, the vector containing the speaker recognition features is an output vector of a last hidden layer in the first neural network.

In some embodiments, the first neural network may be a recursive neural network.

In some embodiments, recognition unit 32 being configured to compensate bias in a second neural network in accordance with the vector containing the speaker recognition features includes being configured to transmit the vector containing the speaker recognition features, output by neuron nodes at the last hidden layer of the first neural network, to bias nodes corresponding to the all or the part of layers, except for the input layer, in the second neural network.

In some embodiments, extraction unit 31 is configured as speaker recognition unit 121 in the system architecture shown in Fig. 3. Recognition unit 32 is configured as speech recognition unit 122 in the system architecture shown in Fig. 3. The apparatus of Fig. 6 is configured as the speech recognition device in the system architecture shown in Fig. 3. More detailed operations of the apparatus of Fig. 6 may be referred to as those described above for the speech recognition device in Fig. 3.

Moreover, the operations executed by extraction unit 31 and recognition unit 32 can be similar to steps S110 and S120 in the above speech recognition method. More details of the operations executed by extraction unit 31 and recognition unit 32 can also be found above.

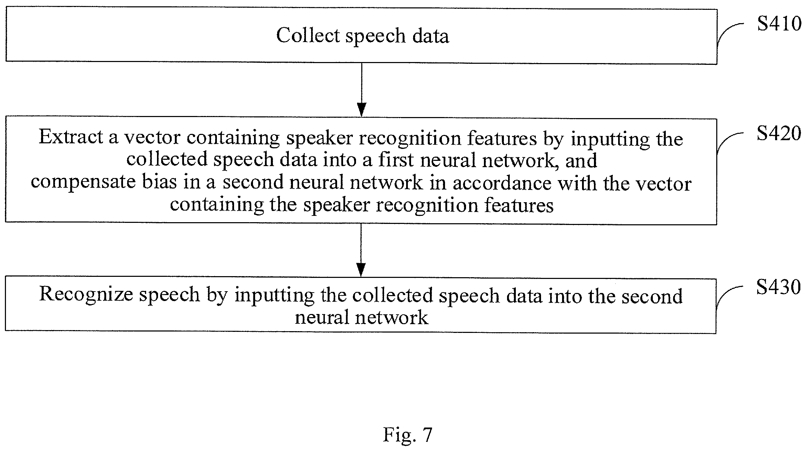

The present application is also directed to a speech recognition method. Fig. 7 is a flow chart of an exemplary speech recognition method, according to some embodiments of the present disclosure. This method can be performed by the speech recognition device of Fig 3 and/or system architecture of Fig. 5. As shown in Fig. 7, the speech recognition method includes steps S410, S420, and S430 illustrated as follows:

In step S410, the system architecture collects speech data.

In step S420, the system architecture extracts a vector containing speaker recognition features by inputting the collected speech data into a first neural network, and compensate bias in a second neural network in accordance with the vector containing the speaker recognition features.

In step S430, the system architecture recognizes speech by inputting the collected speech data into the second neural network.

Steps S410, S420, and S430 can be continuously performed during the collecting process. Whenever a batch of speech data is collected, steps S420 and S430 may be performed on the batch of speech data to obtain a result of speech recognition for the batch of speech data, The size of a batch of speech data may be, but is not limited to, one or more frames.

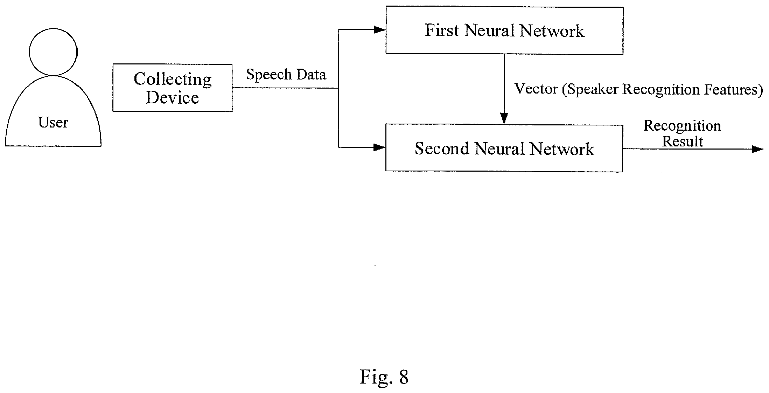

**Fig. 8** is a schematic diagram of an exemplary implementation process of the speech recognition method in **Fig. 7**, according to some embodiments of the present disclosure.

The implementation process includes collecting a user's speech. The implementation process also includes inputting the collected speech data directly or speech features extracted therefrom to the first neural network and the second neural network. The implementation process further include extracting, via the first neural network, the vector containing the speaker recognition features and sending the vector, as a bias term, to the second neural network. The implementation process also include outputting a recognition result of the speech data from the second neural network.

The collected original speech data may be directly provided to the first neural network and the second neural network. Alternatively, speech features may be extracted from the collected original speech data and the extracted speech features are then provided to the first neural network and the second neural network.

In some embodiments, compensating bias in a second neural network in accordance with the vector containing the speaker recognition features includes multiplying the vector containing the speaker recognition features by a weight matrix to be a bias term of the second neural network.

In some embodiments, the speaker recognition features may include at least speaker voiceprint information.

In some embodiments, the first neural network may be a recursive neural network.

In some embodiments, compensating bias in a second neural network in accordance with the vector containing the speaker recognition features includes transmitting the vector containing the speaker recognition features, output by neuron nodes at the last hidden layer of the first neural network, to bias nodes corresponding to the all or the part of layers, except for the input layer, in the second neural network.

More details of the first neural network, the second neural network, the extraction of the vector containing the speaker recognition features, the bias compensation at the second neural network according to the vector containing the speaker recognition features, and the speech recognition based on the second neural network are similar to those described above for the speech recognition method.

The embodiments disclosed in the present application further relate to a speech recognition apparatus. The speech recognition apparatus includes a memory configured to store a program for speech recognition. The speech recognition apparatus also includes a processor configured to execute the program for speech recognition to extract, via a first neural network, a vector containing speaker recognition features from speech data. The processor is also configured to execute the program for speech recognition to compensate bias in a second neural network in accordance with the vector containing the speaker recognition features. The processor is further configured to execute the program for speech recognition to recognize speech, via an acoustic model based on the second neural network, in the speech data.

In some embodiments, the processor being configured to execute the program for speech recognition to compensate bias in a second neural network in accordance with the vector containing the speaker recognition features may include being configured to multiply the vector containing the speaker recognition features by a weight matrix to be a bias term of the second neural network.

In some embodiments, the speaker recognition features may include at least speaker voiceprint information.

In some embodiments, the first neural network may be a recursive neural network.

In some embodiments, the processor being configured to execute the program for speech recognition to compensate bias in a second neural network in accordance with the vector containing the speaker recognition features includes being configured to transmit the vector containing the speaker recognition features, output by neuron nodes at the last hidden layer of the first neural network, to bias nodes corresponding to the all or the part of layers, except for the input layer, in the second neural network.

When the processor is configured to read and execute the program for speech recognition, the processor being configured to collect speech data can refer to the operations of the speech collecting device in Fig. 3. More details of the operations can be found in the description of Fig. 3. More operations details of extracting the vector containing the speaker recognition features, compensating bias at the second neural network according to the vector containing the speaker recognition features, and recognizing speech based on the second neural network can also be referred to as those descriptions above in the speech recognition method.

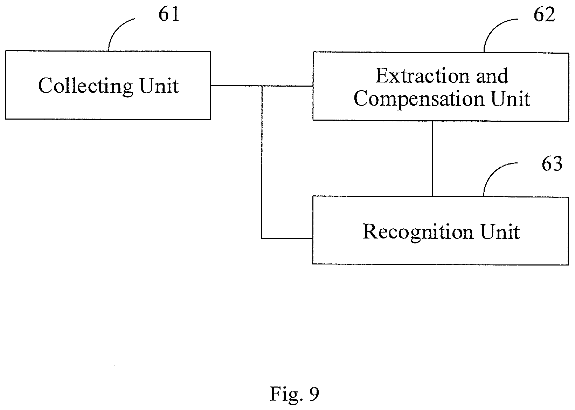

The present application further relates to a speech recognition apparatus. Fig. 9 is a schematic diagram of an exemplary speech recognition apparatus, according to some embodiments of the present disclosure. As shown in Fig. 9, the speech recognition apparatus includes a collecting unit 61 configured to collect speech data. The speech recognition apparatus also includes an extraction and compensation unit 62 configured to extract a vector containing speaker recognition features by inputting the collected speech data into a first neural network, and compensate bias in a second neural network in accordance with the vector containing the speaker recognition features. The speech recognition apparatus further includes a recognition unit 63 configured to recognize speech by inputting the collected speech data into the second neural network. These units (and any sub-units) can be a packaged functional hardware unit designed for use with other components (e.g., portions of an integrated circuit) and/or a part of a program (stored on a computer readable medium) that performs a particular function of related functions.

Collecting unit 61 may be configured to perform operations similar to those for collecting speech data in the above-described apparatus.

Extraction and compensation unit 62 is configured to perform operations similar to those for extracting the vector containing the speaker recognition features and compensating bias at the second neural network in the above-described apparatus.

Recognition unit 63 is configured to perform operations similar to those for recognizing speech.

Collecting unit 61 may be equipped in an independent device. Alternatively, collecting unit 61 can be equipped in the same device with extraction and compensation unit 62 and recognition unit 63.

Collecting unit 61 may be implemented with reference to the speech collecting device shown in Fig. 3. More implementation details of extracting the vector containing the speaker recognition features by the first neural network, compensating bias at the second neural network according to the vector containing the speaker recognition features, and recognizing speech by extraction and compensation unit 62 and recognition unit 63 can be referred to as those descriptions in the above speech recognition method.

As indicated above, it is appreciated that all or some steps of the above-mentioned methods may be completed by relevant hardware under instructions through programs. The programs may be stored in a computer-readable storage medium, such as a read-only memory, a magnetic disk or a compact disc. Optionally, all or some steps of the embodiments described above may also be implemented using one or more integrated circuits. Accordingly, various modules/units in the above embodiments may be implemented in the form of hardware, or may be implemented in the form of software functional modules. This application is not limited to any particular form of combination of hardware and software.

Certainly, there may be various other embodiments of this application. Those skilled in the art would be able to make various changes and variations in accordance with this application without departing from the scope of the appended claims. All these corresponding changes and variations should fall within the scope of the claims of this application.

**Claims**

1. A computer-implemented speech recognition method for on-line speaker adaptive recognition, the method comprising:

   extracting (S110) from speech data, via a first neural network (21) configured to classify speakers according to speech data received by an input layer (211) of the first neural network (21), a vector containing speaker recognition features, wherein the vector containing speaker recognition features is an output of a last hidden layer (212) of the first neural network (21);
   compensating (S120) bias in a second neural network (23) in accordance with the vector containing the speaker recognition features by:

   determining a bias term for the second neural network (23) configured to recognize speech according to input speech data, wherein determining the bias term includes multiplying the extracted vector containing speaker recognition features by a weight matrix (22) to generate the bias term, and transmitting the bias term to bias nodes corresponding to one or more layers (232, 233), except for an input layer (231), in the second neural network (23); and

recognizing speech in the speech data, via an acoustic model based on the second neural network (23), the speech data received by the input layer (231) of the second neural network (23),

wherein the speech data received by the input layer (211) of the first neural network (21) and the speech data received by the input layer (231) of the second neural network (23) are the same speech data.

2. The speech recognition method of claim 1, wherein the first neural network (21), the second neural network (23), and the weight matrix (22) are trained through:

   training the first neural network (21) and the second neural network (23) respectively; and collectively training the trained first neural network (21), the weight matrix (22), and the trained second neural network (23).

3. The speech recognition method of claim 2, further comprising:

   initializing the first neural network (21), the second neural network (23), and the weight matrix (22);
   updating the weight matrix (22) using a back propagation algorithm in accordance with a predetermined objective criterion; and
   updating the second neural network 23) and the weight matrix (22) using the back propagation algorithm in accordance with a predetermined objective criterion.

4. The speech recognition method of any of claims 1-3, wherein the speaker recognition features include at least speaker voiceprint information.

5. The speech recognition method of any of claims 1-4, wherein the speech data is collected original speech data or speech features extracted from collected original speech data.

6. The speech recognition method of any of claims 1-5, wherein the speaker recognition features correspond to different users, or correspond to clusters of different users.

7. A computer-readable medium comprising instructions which, when executed by one or more processors, cause the one or more processors to carry out the method of any of claims 1-6.

8. A computer program comprising instructions which, when the program is executed by a computer, cause the computer to carry out the method of any of claims 1-6.

9. A speech recognition apparatus, comprising:

   an extraction unit (31) configured to extract from speech data, via a first neural network (21) configured to classify speakers according to speech data received by an input layer (211) of the first neural network (21), a vector containing speaker recognition features, wherein the vector containing speaker recognition features is an output of a last hidden layer (212) of the first neural network (21); and
   a recognition unit (32) configured to:
   compensate bias in a second neural network (23) in accordance with the vector containing the speaker recognition features by:

   determining a bias term for the second neural network (23) configured to recognize speech according to input speech data, wherein determining the bias term includes multiplying the extracted vector containing speaker recognition features by a weight matrix (22) to generate the bias term, and transmitting the bias term to bias nodes corresponding to one or more layers (232, 233), except for an input layer (231), in the second neural network (23); and
   recognize speech, via an acoustic model based on the second neural network (23), in the speech data, the speech data received by the input layer (231) of the second neural network (23),
   wherein the speech data received by the input layer (211) of the first neural network (21) and the speech data received by the input layer (231) of the second neural network (23) are the same speech data.

**Patentansprüche**

1. Computerimplementiertes Spracherkennungsverfahren zur adaptiven Online-Sprechererkennung, wobei das Verfahren Folgendes umfasst:

   Extrahieren (S110), aus Sprachdaten, über ein erstes neuronales Netzwerk (21), das zum Klassifizieren von Sprechern gemäß Sprachdaten, die von einer Eingabeschicht (211) des ersten neuronalen Netzwerks (21) empfangen werden, konfiguriert ist, eines Vektors, der Sprechererkennungsmerkmale enthält, wobei der Vektor, der Sprechererkennungsmerkmale enthält, eine Ausgabe einer letzten verborgenen Schicht (212) des ersten neuronalen Netzwerks (21) ist;
   Kompensieren (S120) von Bias in einem zweiten neuronalen Netzwerk (23) in Übereinstimmung mit dem Vektor, der die Sprechererkennungsmerkmale enthält, durch:

> Bestimmen eines Bias-Terms für das zweite neuronale Netzwerk (23), das zum Erkennen von Sprache gemäß eingegebenen Sprachdaten konfiguriert ist, wobei das Bestimmen des Bias-Terms Multiplizieren des extrahierten Vektors, der Sprechererkennungsmerkmale enthält, mit einer Gewichtsmatrix (22), um den Bias-Term zu erzeugen, und Übertragen des Bias-Terms an Bias-Knoten, die einer oder mehreren Schichten (232, 233) entsprechen, mit Ausnahme einer Eingabeschicht (231), in dem zweiten neuronalen Netzwerk (23) enthält; und
> Erkennen von Sprache in den Sprachdaten über ein akustisches Modell basierend auf dem zweiten neuronalen Netzwerk (23), wobei die Sprachdaten von der Eingabeschicht (231) des zweiten neuronalen Netzwerks (23) empfangen werden, wobei die Sprachdaten, die von der Eingabeschicht (211) des ersten neuronalen Netzwerks (21) empfangen werden, und die Sprachdaten, die von der Eingabeschicht (231) des zweiten neuronalen Netzwerks (23) empfangen werden, die gleichen Sprachdaten sind.

2. Spracherkennungsverfahren nach Anspruch 1, wobei das erste neuronale Netzwerk (21), das zweite neuronale Netzwerk (23) und die Gewichtsmatrix (22) trainiert werden durch:

> Trainieren des ersten neuronalen Netzwerks (21) beziehungsweise des zweiten neuronalen Netzwerks (23); und
> gemeinsames Trainieren des trainierten ersten neuronalen Netzwerks (21), der Gewichtsmatrix (22) und des trainierten zweiten neuronalen Netzwerks (23).

3. Spracherkennungsverfahren nach Anspruch 2, ferner umfassend:

> Initialisieren des ersten neuronalen Netzwerks (21), des zweiten neuronalen Netzwerks (23) und der Gewichtsmatrix (22);
> Aktualisieren der Gewichtsmatrix (22) unter Verwendung eines Rückpropagierungsalgorithmus gemäß einem vorbestimmten objektiven Kriterium; und
> Aktualisieren des zweiten neuronalen Netzwerks (23) und der Gewichtungsmatrix (22) unter Verwendung des Rückpropagierungsalgorithmus gemäß einem vorbestimmten objektiven Kriterium.

4. Spracherkennungsverfahren nach einem der Ansprüche 1-3, wobei die Sprechererkennungsmerkmale mindestens Sprecherstimmprofilinformationen enthalten.

5. Spracherkennungsverfahren nach einem der Ansprüche 1-4, wobei die Sprachdaten gesammelte ursprüngliche Sprachdaten oder aus gesammelten ursprünglichen Sprachdaten extrahierte Sprachmerkmale sind.

6. Spracherkennungsverfahren nach einem der Ansprüche 1-5, wobei die Sprechererkennungsmerkmale unterschiedlichen Benutzern entsprechen oder Clustern unterschiedlicher Benutzer entsprechen.

7. Computerlesbares Medium, Informationen umfassend, die, wenn sie durch einen oder mehrere Prozessoren ausgeführt werden, den einen oder die mehreren Prozessoren dazu veranlassen, das Verfahren nach einem der Ansprüche 1-6 durchzuführen.

8. Computerprogramm, Anweisungen umfassend, die, wenn das Programm durch einen Computer ausgeführt wird, den Computer veranlassen, das Verfahren nach einem der Ansprüche 1-6 durchzuführen.

9. Spracherkennungseinrichtung, umfassend:

> eine Extraktionseinheit (31), die dazu konfiguriert ist, aus Sprachdaten, über ein erstes neuronales Netzwerk (21), das zum Klassifizieren von Sprechern gemäß Sprachdaten, die von einer Eingabeschicht (211) des ersten neuronalen Netzwerks (21) empfangen werden, einen Vektor zu extrahieren, der Sprechererkennungsmerkmale enthält, wobei der Vektor, der Sprechererkennungsmerkmale enthält, eine Ausgabe einer letzten verborgenen Schicht (212) des ersten neuronalen Netzwerks (21) ist; und
> eine Erkennungseinheit (32), die konfiguriert zum:
> Kompensieren von Bias in einem zweiten neuronalen Netzwerk (23) in Übereinstimmung mit dem Vektor, der die Sprechererkennungsmerkmale enthält, durch:

>> Bestimmen eines Bias-Terms für das zweite neuronale Netzwerk (23), das zum Erkennen von Sprache gemäß eingegebenen Sprachdaten konfiguriert ist, wobei das Bestimmen des Bias-Terms Multiplizieren des extrahierten Vektors, der Sprechererkennungsmerkmale enthält, mit einer Gewichtsmatrix (22), um den Bias-Term zu erzeugen, und

Übertragen des Bias-Terms an Bias-Knoten, die einer oder mehreren Schichten (232, 233) entsprechen, mit Ausnahme einer Eingabeschicht (231), in dem zweiten neuronalen Netzwerk (23) enthält; und

Erkennen von Sprache, über ein akustisches Modell basierend auf dem zweiten neuronalen Netzwerk (23), in den Sprachdaten, wobei die Sprachdaten von der Eingabeschicht (231) des zweiten neuronalen Netzwerks (23) empfangen werden, wobei die Sprachdaten, die von der Eingabeschicht (211) des ersten neuronalen Netzwerks (21) empfangen werden, und die Sprachdaten, die von der Eingabeschicht (231) des zweiten neuronalen Netzwerks (23) empfangen werden, die gleichen Sprachdaten sind.

## Revendications

1. Procédé de reconnaissance vocale mis en œuvre par ordinateur permettant la reconnaissance adaptative en ligne du locuteur, le procédé comprenant :

l'extraction (S110) à partir de données de parole, via un premier réseau neuronal (21) configuré pour classer des locuteurs selon des données de parole reçues par une couche d'entrée (211) du premier réseau neuronal (21), d'un vecteur contenant des caractéristiques de reconnaissance de locuteur, dans lequel le vecteur contenant des caractéristiques de reconnaissance du locuteur est une sortie d'une dernière couche cachée (212) du premier réseau neuronal (21) ;

la compensation (S120) d'un biais dans un second réseau neuronal (23) conformément au vecteur contenant les caractéristiques de reconnaissance du locuteur par :

la détermination d'un terme de biais pour le second réseau neuronal (23) configuré pour reconnaître la parole en fonction de données de parole d'entrée, dans lequel la détermination du terme de biais comprend la multiplication du vecteur extrait contenant les caractéristiques de reconnaissance du locuteur par une matrice de pondération (22) pour générer le terme de biais, et

la transmission du terme de biais à des nœuds de biais correspondant à une ou plusieurs couches (232, 233), à l'exception d'une couche d'entrée (231), dans le second réseau neuronal (23) ; et

la reconnaissance de parole dans les données de parole, via un modèle acoustique basé sur le second réseau neuronal (23), les données de parole reçues par la couche d'entrée (231) du second réseau neuronal (23),

dans lequel les données de parole reçues par la couche d'entrée (211) du premier réseau neuronal (21) et les données de parole reçues par la couche d'entrée (231) du second réseau neuronal (23) sont les mêmes données de parole.

2. Procédé de reconnaissance vocale selon la revendication 1, dans lequel le premier réseau neuronal (21), le second réseau neuronal (23) et la matrice de pondération (22) sont entraînés par :

l'entraînement du premier réseau neuronal (21) et du second réseau neuronal (23) respectivement ; et

l'entraînement collectif du premier réseau neuronal entraîné (21), de la matrice de pondération (22) et du second réseau neuronal entraîné (23).

3. Procédé de reconnaissance vocale selon la revendication 2, comprenant en outre :

l'initialisation du premier réseau neuronal (21), du second réseau neuronal (23) et de la matrice de pondération (22) ;

la mise à jour de la matrice de pondération (22) à l'aide d'un algorithme de rétropropagation conformément à un critère d'objectif prédéterminé ; et

la mise à jour du second réseau neuronal (23) et de la matrice de pondération (22) en utilisant l'algorithme de rétropropagation conformément à un critère d'objectif prédéterminé.

4. Procédé de reconnaissance vocale selon l'une quelconque des revendications 1 à 3, dans lequel les caractéristiques de reconnaissance du locuteur comprennent au moins des informations d'empreinte vocale du locuteur.

5. Procédé de reconnaissance vocale selon l'une quelconque des revendications 1 à 4, dans lequel les données de parole sont des données de parole originales collectées ou des caractéristiques de parole extraites de données de parole originales collectées.

6. Procédé de reconnaissance vocale selon l'une quelconque des revendications 1 à 5, dans lequel les caractéristiques de reconnaissance du locuteur correspondent à différents utilisateurs, ou correspondent à des groupes d'utilisateurs différents.

7. Support lisible par ordinateur comprenant des instructions qui, lorsqu'elles sont exécutées par un ou plusieurs processeurs, amènent l'un ou plusieurs processeurs à exécuter le procédé selon l'une quelconque des revendications 1 à 6.

8. Programme informatique comprenant des instructions qui, lorsque le programme est exécuté par un ordinateur, amènent l'ordinateur à exécuter le procédé selon l'une quelconque des revendications 1 à 6.

9. Appareil de reconnaissance vocale, comprenant :

   une unité d'extraction (31) configurée pour extraire des données de parole, via un premier réseau neuronal (21) configuré pour classer des locuteurs en fonction de données de parole reçues par une couche d'entrée (211) du premier réseau neuronal (21), un vecteur contenant des caractéristiques de reconnaissance du locuteur, dans lequel le vecteur contenant des caractéristiques de reconnaissance du locuteur est une sortie d'une dernière couche cachée (212) du premier réseau neuronal (21) ; et
   une unité de reconnaissance (32) configurée pour :
   compenser un biais dans un second réseau neuronal (23) conformément au vecteur contenant les caractéristiques de reconnaissance du locuteur par :

      la détermination d'un terme de biais pour le second réseau neuronal (23) configuré pour reconnaître la parole en fonction de données de parole d'entrée, dans lequel la détermination du terme de biais comprend la multiplication du vecteur extrait contenant les caractéristiques de reconnaissance du locuteur par une matrice de pondération (22) pour générer le terme de biais, et
      la transmission du terme de biais aux noeuds de biais correspondant à une ou plusieurs couches (232, 233), à l'exception d'une couche d'entrée (231), dans le second réseau neuronal (23) ; et
      la reconnaissance de la parole, via un modèle acoustique basé sur le second réseau neuronal (23), dans les données de parole, les données de parole reçues par la couche d'entrée (231) du second réseau neuronal (23),
      dans lequel les données de parole reçues par la couche d'entrée (211) du premier réseau neuronal (21) et les données de parole reçues par la couche d'entrée (231) du second réseau neuronal (23) sont les mêmes données vocales.

Fig. 1

Extract, via a first neural network, a vector containing speaker recognition features from speech data ⟋ S110

Compensate bias in a second neural network in accordance with the vector containing the speaker recognition features; and
recognize speech, via an acoustic model based on the second neural network, in the speech data ⟋ S120

Fig. 2

Fig. 3

Fig. 4

Fig. 5

31

32

| Extraction Unit | | Recognition Unit |

Fig. 6

| Collect speech data | S410 |

| Extract a vector containing speaker recognition features by inputting the collected speech data into a first neural network, and compensate bias in a second neural network in accordance with the vector containing the speaker recognition features | S420 |

| Recognize speech by inputting the collected speech data into the second neural network | S430 |

Fig. 7

Fig. 8

61

62

| Collecting Unit |

| Extraction and Compensation Unit |

63

| Recognition Unit |

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHAOFEI XUE et al.** Fast adaptation of deep neural network based on discriminant codes for speech recognition. *IEEE/ACM Transactions On Audio, Speech, And Language Processing,* 01 December 2014, vol. 22 (12), 1713-1725
- **HUANG ZHIYING et al.** Speaker adaptation OF RNN-BLSTM for speech recognition based on speaker code. *2016 IEEE International Conference on Acoustics, Speech and Signal Processing (ICASSP),* 20 March 2016, 5305-5309

- **YAJIE MIAO et al.** *Towards Speaker Adaptive Training of Deep Neural Network Acoustic Models,* 01 December 2014
- **VARIANI EHSAN et al.** Deep neural networks for small footprint text-dependent speaker verification. *2014 IEEE International Conference on Acoustics, Speech and Signal Processing (ICASSP),* 04 May 2014, 4052-4056